# EUROPEAN PATENT SPECIFICATION

(11) **EP 3 045 549 B1**
(45) Date of publication and mention of the grant of the patent: **07.11.2018**
(21) Application number: 16160205.7
(22) Date of filing: 14.03.2016
(51) Int. Cl.: C21B 13/00, C21B 13/14, C21B 11/02

(54) **METHOD TO PRODUCE AN ENCAPSULATED PRESSED REDUCED IRON COMPOUND AND ENCAPSULATED PRESSED REDUCED IRON COMPOUND**
VERFAHREN ZUR HERSTELLUNG EINER GEKAPSELTEN GEPRESSTEN REDUZIERTEN EISENVERBINDUNG SOWIE GEKAPSELTE GEPRESSTE REDUZIERTE EISENVERBINDUNG
PROCÉDÉ POUR PRODUIRE UN COMPOSÉ DE FER RÉDUIT PRESSÉ ENCAPSULÉ ET LEDIT COMPOSÉ

(43) Date of publication of application: 20.07.2016
(73) Proprietor: Saharkhiz, Mohammad Reza, 1977635615 Tehran (IR); Rassa, Sohail, Tehran (IR); Mohammadi Roshandeh, Sohrab, 1476739846 Tehran (IR)
(72) Inventor: Saharkhiz, Mohammad Reza, 1977635615 Tehran (IR); Rassa, Sohail, Tehran (IR); Mohammadi Roshandeh, Sohrab, 1476739846 Tehran (IR)
(74) Representative: Viering, Jentschura & Partner mbB Patent- und Rechtsanwälte

(56) References cited:
- WO-A2-2007/145972
- GB-A- 2 129 708
- Masaaki Atsushi: "MIDREX PROCESSES", KOBELKO TECHNOLOGY REVIEW, 29 October 2010 (2010-10-29), pages 50-54, XP055297440, Retrieved from the Internet: URL:http://www.kobelco.co.jp/english/ktr/p df/ktr_29/050-057.pdf [retrieved on 2016-08-24]

## Description

The invention refers to a method to produce a capsulated pressed reduced iron compound, which is completely encapsulated by a covering embodying material, comprising the steps of reducing iron ore in an iron ore direct reduction shaft furnace and subjecting a certain amount of the thus obtained reduced iron or sponge iron to a cold briquetting or cold forming process executed in a forming device with ancillaries.
Further the invention refers to a capsulated pressed reduced iron compound comprising a completely encapsulated and press-formed amount of reduced iron or sponge iron obtained from an iron ore direct reduction process executed in an iron ore direct reduction shaft Capsulation processes for DRI are known, for example from GB2129708A, which discloses the surface passivation of DRI in a wax layer.

Application of scrap substitutes such as Cold Direct Reduced Iron (CDRI), Hot Briquetted Iron (HBI), and Cold Briquetted Iron (CBI) is increased rapidly in the last decades especially in Electric Arc Furnaces (EAF) because of decreasing quality of different grades of scrap and the increasing amount of its non-ferrous contaminants. Limited accessibility to qualified scrap material which caused its rather high international market prices and the descending price of natural gas (in certain areas) on the other hand, due to the discovery of Shale Gas; are the other factors which led the steel industry worldwide to apply the above mentioned substitutes as the main middle products especially for feeding EAFs. That would be however, a continuing trend in the future upcoming years and for many steel manufacturers a wise and strategic decision would be definitely investing on construction of Direct Reduction Units and simultaneously adapting their EAFs to be fed even up to 100% different shapes of DRI (Direct Reduced Iron): Hot Direct Reduced Iron (HDRI), HBI, CDRI, and CBI.
Developing countries with vast natural gas resources or better say countries who invest in DR (Direct Reduction) plants which have already constructed and installed many Direct Reduction Units like Iran who is now the second worldwide producer of DRI and actually the first nation in the world who produces DRI by using natural gas, are not an exception to this trend. The following table depicts Direct Reduction Units of Iran in operation mode or construction phase.

| Item No. | Plant | Owner | Product | Capacity (tpa) | Modules | Status |
|---|---|---|---|---|---|---|
| **1** | Sabzevar | NISCO | CDRI | 800,000 | 1 | C |
| **2** | Bafgh | NISCO | CDRI | 800,000 | 1 | C |
| **3** | Bardsir | ISSCO | CDRI | 1,000,000 | 1 | O |
| **4** | Shadegan | NISCO | CDRI | 800,000 | 1 | C |
| **5** | Sirjan | SJSCO | CDRI | 1,960,000 | 2 | O/C |
| **6** | Ardakan | ASD Group | CDRI | 1,000,000 | 1 | C |
| **7** | Golgohar | Golgohar | CDRI | 1,700,000 | 1 | O |
| **8** | SKS | SKS | CDRI | 1,850,000 | 2 | O |
| **9** | Chaharmahal | MSC | CDRI | 800,000 | 1 | C |
| **10** | Miyaneh | NISCO | CDRI | 800,000 | 1 | C |
| **11** | Zamzam II | KSC | CDRI | 960,000 | 1 | O |
| **12** | Saba | MSC | CDRI | 1,500,000 | 1 | O |
| **13** | HOSCO | MSC | CDRI | 1,650,000 | 2 | O |
| **14** | KSC/Korf | KSC | CDRI | 1,920,000 | 3 | O |
| **15** | Zamzam I | KSC | CDRI | 800,000 | 1 | O |
| **16** | MSC/Unit 06 | MSC | CDRI | 4,800,000 | 6 | O |
| **17** | IGISCO | IGISCO | CDRI | 930,000 | 1 | O |
| **18** | ARFAA | ARFAA | CDRI | 930,000 | 1 | O |
| **19** | Khorasan I | KSC Co. | CDRI | 800,000 | 1 | O |
| **20** | Khorasan II | IMPADCO | CDRI | 800,000 | 1 | O |
| **21** | Kharrazi | MSC | CDRI | 3,000,000 | 2 | O |
| **22** | Ghaenat | NISCO | CDRI | 800,000 | 1 | C |
| **23** | PGSSCO | PGSSCO | HBI | 1,500,000 | 1 | C |
| **24** | Chador-Malu | CMIC | CDRI/HDRI | 1,700,000 | 1 | C |
| **25** | Baft | NISCO | CDRI | 800,000 | 1 | C |
| **26** | Neyriz | NISCO | CDRI | 800,000 | 1 | C |
| **27** | Pasargad | Pasargad | CDRI/HDRI | 1,500,000 | 1 | F |
| **Status Coding: O - Operating / C - Construction / F - Feasibility Study** | | | | | | |

As it may be seen from the table, almost all of these units are producing CDRI by using the gas based vertical shaft furnace of Midrex® process and there is no HYL Plant in Iran under construction or in operation so far. It has to be also noted that more than 95% of the Iranian Midrex® Modules are of 600 Series type which have been modified to produce at least 800,000 tpa of CDRI. Few units are also of MegaMod® type.

CDRI in comparison to HBI has several disadvantages which are comprehensively discussed below. Modification of the existing 600 Series Modules will not be a feasible approach to achieve the benefits of producing HBI instead of CDRI because of the large-scale changes necessary on the installed equipment and infrastructures. Low production rate of CBI on the other hand, due to the decreased amount of CDRI fines (∼ 8%) in the process, and the requirement to use Sodium Silicate and lime as binders for producing CBI and hence the necessity of using additional equipment and infrastructure eliminates CBI as a replacement of CDRI.

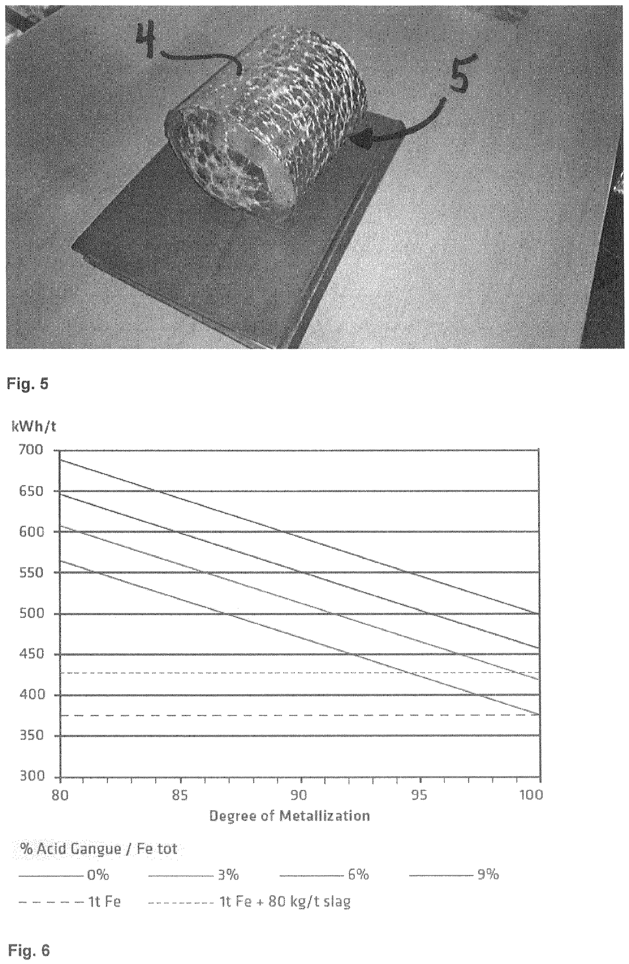

Recent investigation verifies that the required energy for melting different versions of DRI is a function of its Degree of Metallization, Carbon content of DRI, and the Gangue content i.e. all its non-metallic and non-ferrous metallic contaminants which will be eventually lied in the range of 420 - 600 kWh/metric ton of DRI, which can be seen in the diagram of Fig. 6.

The lowest required energy for DRI melting down is when it is going to be charged into EAF at its highest possible charging temperature. The highest possible rate of energy saving would be in the range of 100 - 150 kWh per metric ton of hot heel when HDRI is charged into EAF instead of CDRI. The following Table compares the performance of EAF No.5 of Saudi Arabian Hadeed Iron & Steel Company in two cases of HDRI and CDRI charging as an illustrative example.

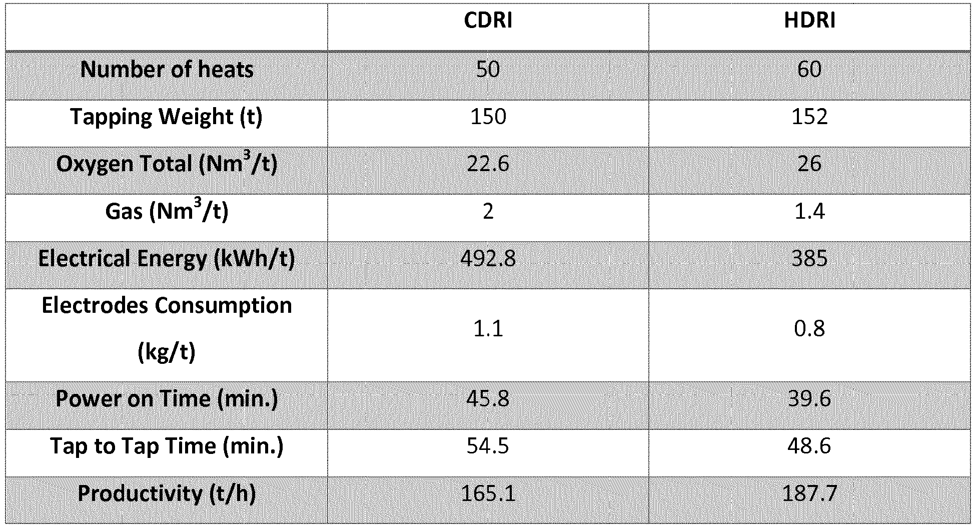

They achieved to 27 heats within the first 24 hours of a 48-hour performance test of the Furnace by charging a ratio of 75% - 25% of CDRI/scrap as the feed material. It also shows the outstanding results of charging 100% HDRI with a temperature of 579° C, degree of metallization of 95%, and Carbon content of 2.1% into the Furnace.

At the present time there's only two similar projects in Iran defined to be capable of charging HDRI into EAF which none of them are operational yet.

As hand on experience in our country, the Iranian steelmaker's common practice is applying a feed into EAFs with at least 70% CDRI and maximum 30% scrap, and using maximum 35% CDRI in their Induction Furnaces. Almost all the Iranian EAFs are of high power type in the range of 400 - 700 kVA/t or even ultrahigh power type with greater than 700 kVA/t of power which absolutely provides the ability to be charged up to 100% with DRI. That's however while medium power furnaces with 200 - 400 kVA/t and low power types with 100 - 200 kVA/t may be charged with maximum 50% DRI. The following table shows that in case of substituting scrap with different versions of DRI, it would be possible to get rid of non-ferrous metallic contaminants such as Copper, Lead, Nickel, Chromium, Molybdenum, and Manganese. In addition to this fact, by creating a hot heel with 100% DRI and in case that Carbon content of DRI could be regulated at a level that we have excess Carbon in the melt comparing with Oxygen content of FeO impurity; providing a hot heel with a very low content of N₂, as low as 0.0015% would be possible. Normal range of N₂ impurity lies between 0.0030 - 0.0065% in case of 60% DRI charging into EAF. That's however, we need a Nitrogen content in EAF melt lower than 0.0060% to be able to finally produce steel products with the expected mechanical properties and good strength.

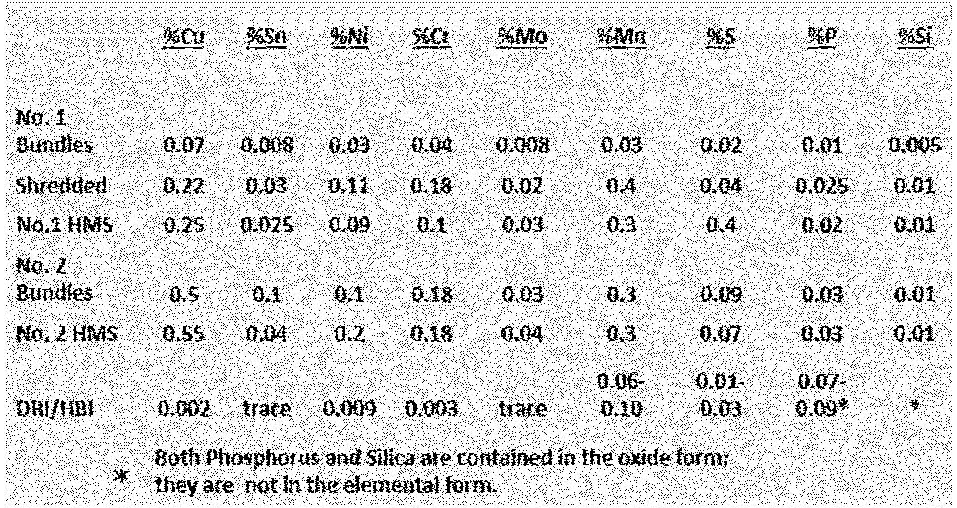

Therefore, a type of DRI material, subject of this invention and its features would be much more attractive to be employed by steelmaker due to the following reasons:

### a) Safe Storage, Transportation & Export

Direct Reduced Iron (DRI) which mainly consists of Fe and FeₛC is produced by reducing of Fe₂O₃ pellets and removing Oxygen from it. Removal of Oxygen generates a spongy posture for the reduced pellets which sharply increase the material porosity. Such a high percent of porosity will definitely increase the specific surface of the material which persuades re-oxidation of the material in presence of atmospheric oxygen, water, and especially sea water which has plenty of soluble salts. Oxidation reactions are apparently exothermic and CDRI, due to its spongy nature and low conductivity won't let this sensible heat to be easily released to atmosphere. Thus, CDRI piles in open yard, storage bins, or even trucks and ship during transportation will potentially blaze and get into reaction with water to produce Hydrogen gas which will then create explosive mixtures with air. Even passivation of CDRI from its auto-oxidation reactions by implementing the Aging Procedure, i.e. holding the product at least for 36 hours in product bins with inert atmosphere would be inefficient in case of the presence of water, especially sea water again.

### b) Applying in EAF

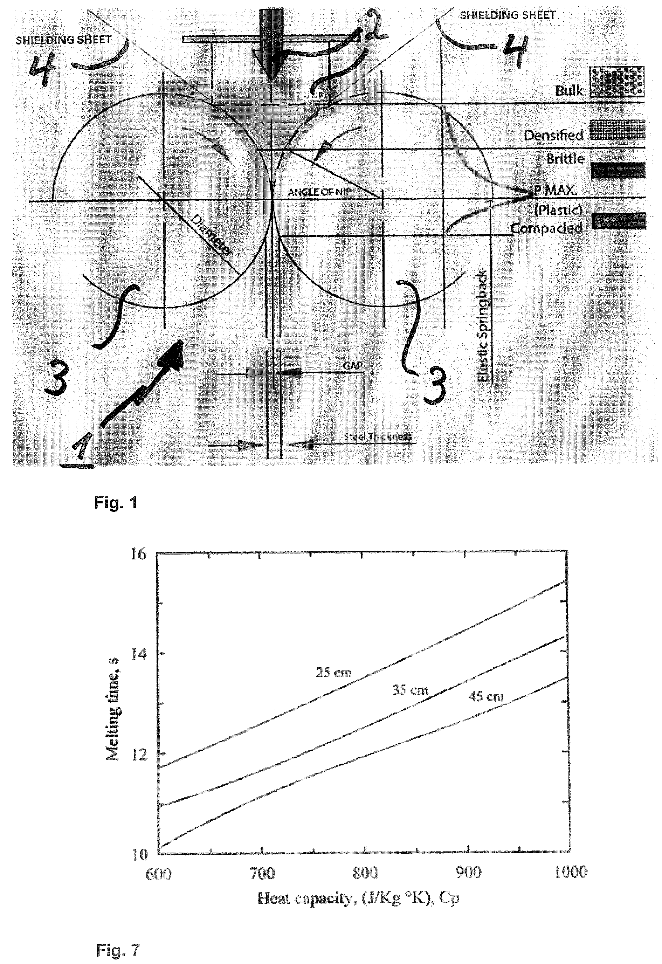

DRI is a material highly heterogeneous both physically and chemically, and its metallurgical and thermo-physical properties are not well known on the other hand. Four key properties of different shapes of DRI are indicated and explained as follows, which influence on its melting characteristics in EAF: The diagram of Fig. 7 illustrates the effect of DRI heat capacity on its melting time in various arc lengths of furnace.

As the heat capacity increases, the melting time also increases. Comparing different shapes of DRI together, CDRI has the greatest Cₚ due to its high percent of porosity.

### • Conductivity (k)

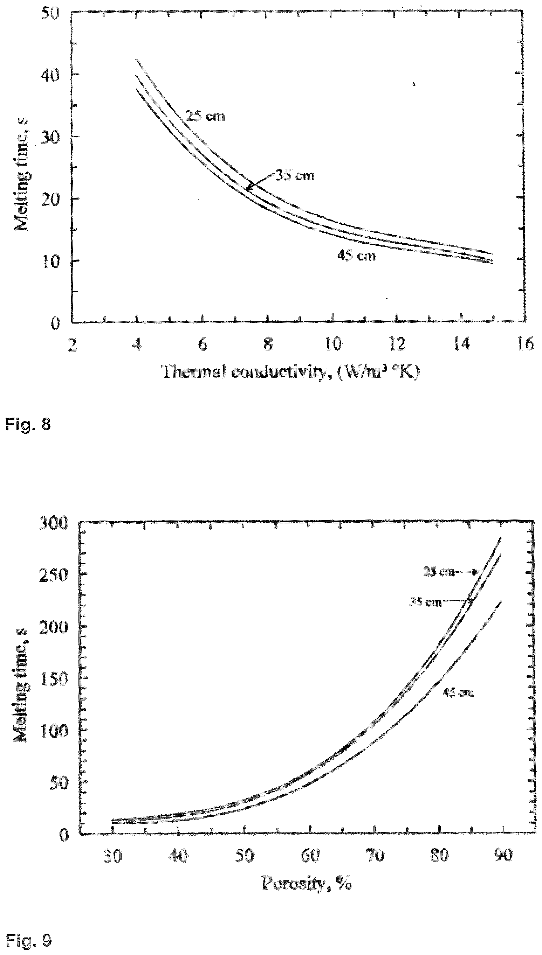

The diagram of Fig. 8 shows the influence of DRI thermal conductivity on its melting time.

Experimental data on thermal conductivity of DRI was reported by Gudenau et al., indicating values in the range from 2 - 5 W/m.K for the temperature range from 200 - 800° C. Thermal conductivity can be further increased by decreasing porosity, and thus melting time may be considerably reduced.

### • Porosity

The diagram of Fig. 9 demonstrates the effect of porosity on melting time.

CDRI is a highly porous material with a porosity in the range of 50 - 70%. Diagram apparently indicates the negative effect of such high porosity on melting time. As porosity increases the melting time also increases.

### • Density (ρ)

Penetrating into the lower sections of interaction layer between molten slag and hot heel is the ideal case for steelmaker during continuous charging of DRI into EAF. CDRI has the lowest density among different shapes of DRI. Therefore it is more likely to come into a floating mode on molten slag layer which causes an imperfect surface interaction with the hot heel, and thus the heat transfer rate to CDRI will be sharply decreased.

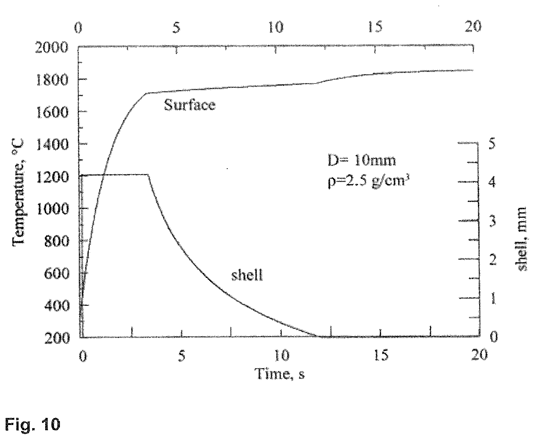

The diagram of Fig. 10 shows the simulation results of melting one particle of CDRI and its surface temperature profile till complete melting.

The particle was 10 mm in diameter and its apparent density was 2.5 g/cm³. Melting time was reported to be approximately 12 seconds and the particle surface temperature was reached up to approximately 1800° C before complete melting. The high capability of frozen shell formation of CDRI in the initial 3.75 seconds of the melting process shall be deeply noted.

For the same conditions in another approach, Elliot et al., defined a melting time of approximately 35 seconds. The interesting point is that in Elliot simulation, melting of the CDRI particle occurred in molten slag layer but in the above described test melting process occurred in the hot heel.

By analysing the above descriptions along with the illustrated diagrams, the following conclusions become evident:
❖ HDRI material may be only used in the same steel complex which is going to be produced due to the necessity of keeping its high temperature range as much as possible during charging into the EAF. HDRI transport is only possible in distance ranges of utmost 100 -200 m under inert atmosphere.
❖ Applying higher arc lengths in EAF will provide more thermal energy available for more continuous charging of material in unit of time.
❖ Melting time of DRI inside hot heel of EAF is much lower than the molten slag layer.
❖ A DRI product with higher conductivity, less porosity, higher density, shorter frozen shell formation time, lower specific surface, higher degree of metallization, lower gangue content, capable of being stored in open yard for long time, and inland and marine shipment in long distances without any special safety features would be an ideal scrap substitute for steelmaker.

Thus, in the recent years there is an increasing trend to apply briquetted DRI as the main feed in EAFs. Using hot briquetting technique sharply reduces specific surface of DRI. The auto-oxidation problem, overheating of CDRI piles during open yard storage and transportation, generating an explosive mixture of air and Hydrogen during marine shipment, and the other technical problems of applying CDRI in electric arc steelmaking will be hence resolved in case of using briquetted forms of DRI. The best form of DRI for international export is also HBI and only Direct Reduction Plants with the capability to produce this form of DRI, such as Midrex MegaMod® units may be counted as merchant plants worldwide.

It is worthy to note that Tavakoli et al., presented a new technique for briquetting CDRI in Iron making and Steelmaking Bulletin Volume 38, on August 2011 which was introduced as Cold Briquetting of Sponge Iron (CBSI). They have used 6% binder, 10% sponge iron fines, and 4% Anthracite as additives to CDRI for the purpose of producing the so called CBSI.

Most of the Direct Reduction units of countries like Iran, i.e. 600 Series Midrex® type modules are only capable of producing CDRI. Modifying such production lines to be capable of producing HBI, will be definitely not a feasible approach due to the major changes necessary on their existing equipment and requirement to add several new devices such as Product Discharge Chamber (PDC), expensive Hot Briquetting Machines with only limited number of worldwide manufacturers, and some other ancillary equipment such as vibrating quench tanks or chain conveying quench tanks.

All the present cold briquetting techniques on the other hand, have been so far used for briquetting of CDRI fines and not the CDRI product itself along with the mandatory requirement of using Sodium Silicate binder and other additives like Lime and Molasses. Even in the very recent approaches to produce briquettes from CDRI, applying 6% binder and another additive such as Anthracite is an improvement and recommended. Also adding CDRI fines is restricted to be up to 10% maximum. The press for producing such CBSI product is of roller type which has only few reliable manufacturers worldwide but with a capability of producing limited density p.

Considering all the above, it is an object of the present invention to propose a solution which provides a direct reduced iron product which has an improved performance in respect to its capability to be transported over long distances and in respect to its melting properties in primary metallurgical steel making processes in addition to its other features mentioned herein and which is suitable as a scrap substituting material.

This object is achieved by a method according to claim 1 and a capsulated pressed reduced iron compound according to claim 13.

Advantageous embodiments and advisable developments and features are part of the respective depending claims.
Subject of the present invention is a method to produce a capsulated pressed reduced iron compound, which is completely encapsulated by a covering embodying material, comprising the steps of reducing iron ore in an iron ore direct reduction shaft furnace and subjecting a certain amount of the thus obtained reduced iron or sponge iron to a cold briquetting or cold forming process executed in a forming device with ancillaries, wherein the certain amount of reduced iron or of sponge iron embodied is delivered to at least one mould arranged in the forming device, where it is exposed to a compressive force and press-formed to the capsulated pressed reduced iron compound having a shape corresponding to the form provided by the at least one mould arranged in the forming device and having an apparent density of greater than 5.0 g/cm³, and wherein either the certain amount of reduced iron or sponge iron is completely encapsulated by means of the covering embodying material which is provided before or during the certain amount of reduced iron or sponge iron is exposed to the compressive force or wherein the certain amount of reduced iron or sponge iron is completely encapsulated by means of the covering embodying material which is provided immediately after the certain amount of reduced iron or sponge iron is press-formed to embody the form of the iron compound.
Also a capsulated pressed reduced iron compound comprising a completely encapsulated and press-formed amount of reduced iron or sponge iron obtained from an iron ore direct reduction process executed in an iron ore direct reduction shaft furnace, which amount of reduced iron or sponge iron is completely encapsulated by an enveloping covering embodying material, especially a metallic material, and which is press-formed to have an apparent density of greater than 5.0 g/cm³, preferably of 5.0 g/cm³ - 6.0 g/cm³, is another subject of the present invention.
The invention provides Capsulated Pressed Reduced Iron ("CAPRI") produced from Cold Direct Reduced Iron (CDRI) which has been actually encapsulated, pressed and shielded. This product can be produced in various different grades with various added values and in different moulded shapes within the respective selected technological limits. The product CAPRI provides the capability to be transported in long distances without any risk and hazards like flammability, provides a new method and regime of charging furnaces named below and can be used as an intermediate product in the range of initial materials like scrap, HBI, CBI and secondary metallurgy to be fed into Blast Furnace, Electric Arc Furnace (EAF), Basic Oxygen Furnace (BOF), Induction Furnaces and Ladle Furnace.

The main advantage of this invention is to provide a new method for producing a capsulated, pressed and shielded form of CDRI, which its production needs no changes and modification on the existing production lines of CDRI, as it will be produced from the CDRI product at the exit of DR module shaft furnace, and does not need application of any kind of binder or other additives to produce it. It has not the disadvantages of CDRI such as low apparent density and the risk of auto-ignition, while in parallel has the same several advantages of HBI and even more as herein mentioned in comparison with CDRI. In addition as next advantage, will enable steelmaker to reduce Tap to Tap Time of EAF operation and secondary metallurgical activities in overall steel making process, and removal of charging scrap into EAF respectively.

Another important aspect of the CAPRI product is resolving the problem of the hazardous transportation to other facilities by truck or via marine shipment mainly due to the fact that in the pressed CAPRI product, DRI has been so compressed that the porosity is at lowest minimal while with the help of shielding (while pressed shield becomes part of the compound) there remains no penetrating gate for parameters causing the flammability problem. The new CAPRI product obtained when executing and performing the invention is a breakthrough for standalone DR plants who produce only DRI and need to sell it via delivering domestically or internationally for export purposes.

In an advantageous embodiment of the invention the certain amount of reduced iron or sponge iron is completely encapsulated by the covering embodying material to cover the outside of the certain amount of reduced iron or sponge iron before it is delivered to the at least one mould provided in the forming device and before it is exposed to the compressive force press-forming said iron compound.

In another advantageous embodiment certain amount of reduced iron or sponge iron is completely encapsulated by the covering embodying material which is either simultaneously provided to build an encapsulating layer within the mould when the certain amount of reduced iron or sponge iron is exposed to the compressive force and press-formed to the iron compound or which covering embodying material is provided immediately after the certain amount of reduced iron or sponge iron is press-formed by means of the compressive force to embody the form of the iron compound, wherein the covering embodying material is attached to form an encapsulating envelop of the iron compound.

The reduced iron or sponge iron can be mixed with up to 35 % by weight of passivated fine grade reduced iron particles (fines) coming from the iron ore direct reduction shaft furnace before it is delivered to the at least one mould of the forming device.

Furthermore, it is also possible that the reduced iron or sponge iron is delivered to the at least one mould of the forming device without any admixture of a binder.

Furthermore it is not necessary to have the reduced iron be passivated before being encapsulated and press-formed. Therefore it is also provided by the invention, that the reduced iron or sponge iron is delivered to the at least one mould of the forming device without having passed any passivation process.

The reduced iron or sponge iron can be delivered to the at least one mould of the forming device mixed with additives, especially lime, dolomite or non-coking coal, required during a primary metallurgical process step of a steel making process, especially during a primary metallurgical process step producing an iron melt. Those processes are for instance conducted in a Blast Furnace, an Electric Arc Furnace (EAF) or an Induction Furnace.

Another beneficial method according to the invention provides, that the reduced iron or sponge iron is delivered to the at least one mould of the forming device mixed with additives required during a secondary metallurgical process step of a steel making process, especially during a secondary metallurgical process step to refine an iron melt. Those processes are for instance performed in a Basic Oxygen Furnace (BOF) or a Ladle Furnace.

According to another aspect of the invention it is also possible that the reduced iron or sponge iron is delivered to the at least one mould of the forming device mixed with ferrous metallic chips made of scrap.
To produce the CAPRI product it is of further advantageous when the reduced iron or sponge iron is filled into a can or container consisting of the covering embodying material and that the can or container is afterwards closed by a cover or cap consisting of the covering embodying material and that the capped can or container is then delivered to the mould of the forming device and press-formed to constitute the capsulated pressed reduced iron compound (CAPRI).

In the invention the covering embodying material has a thickness of utmost 1.0 mm and/or of at least 0.2 mm, which is also provided by the invention.
As a material which is appropriate to be used as a covering embodying material metal can be chosen. In this respect the method according to the invention further comprises that the covering embodying material consists of a metallic material, especially a non-galvanized steel sheet.
Further, the method according to the invention may comprise the steps of producing a can or container consisting of the covering embodying material, charging or filling the can or container with the certain amount of the reduced iron or sponge iron, completely encapsulating the certain amount of the reduced iron or sponge iron by means of the covering embodying material, especially by capping the can or container with a cover or cap consisting of the covering embodying material, and press-forming the encapsulated certain amount of reduced iron or sponge iron to constitute the capsulated pressed reduced iron compound being of a shape provided by the mould of the forming device.
Suitable CAPRI products having an advantage dimension are obtained when a capsulated pressed reduced iron compound having a diameter of 8 - 15 cm and/or having a height of 10 - 18 cm and/or having a product weight of 2.8 - 19.0 kg is press-formed. The best size is a cylinder with a diameter of 10 cm.
According to another aspect of the invention the method is characterized in, that during press-forming of a respective certain amount of reduced iron or of sponge iron in the at least one mould of the forming device a pressing force of at least 4500 kg_{f}/cm² or 44.13 kN/cm², preferably of at least 5000 kg_{f}/cm² or 49.03 kN/ cm², is applied to the respective certain amount of reduced iron or of sponge iron as the compressive force press-forming the capsulated pressed reduced iron compound.

Finally the capsulated pressed reduced iron compound can be produced with a method according to one of the claims 1 - 15.

The CAPRI product is produced by machines producing this new type of briquetting without any necessity for binding agents and need to change or modify the existing CDRI production lines and by immediate receiving of CDRI product just exiting DR shaft furnace which is absolutely not necessary to be passivated inside CDRI product bins.

The forming machine with its ancillaries can be capable to produce CAPRI in continuous steady state production at a rated capacity of up to 200 t/h in one or multiple forming machines in different capacities depending on the selected size of CAPRI variety of which is shown in Tables 1a-1c.

A machinery for producing CAPRI can be a modular facility, mechanical forming with single mould repeated in single forming machines capable of pressing 500 t_{f} each. This will reduce decrease in total production capacity during down times and failures, reduces consumption of consumables, and energy while higher speed becomes achievable and in this configuration we will have a simpler design, lower operation costs, and easier operation and maintenance of the facilities.

CAPRI due to its production under a pressure of approximately 5000 kg_{f}/cm² on each piece, and applying of a steel sheet or any other appropriate covering shield with a typical thickness of maximum 1.0 mm, in addition to all the so called benefits of HBI, has the potency to be produced with adding up to 35% (as a proper average) of passivated CDRI fines (make the fines useable by incorporating it into capsules) and any other optional additive without using any required or mandatory binder.

The main specifications of CAPRI and its Plant Unit are as follows:
It must be noted that the indicated specifications belong to a CAPRI product which dimensionally could be of number of types and shapes within technological limits, hence the producing machine besides its specification may be enhanced to produce different types nevertheless with the same techniques mentioned, namely encapsulation under shielding, enrichment by additives, pressing and transporting and/or changing the initial material (DRI) to i.e. shredded iron and even for other metals such as Aluminium and Copper by using the same concept. This means that the producing machine described herein could have different designs even of roller press type (as referenced herein) but whichever of them using herein mentioned techniques falls under taking advantage of the invention. Certain alternatives are already defined here which shows the flexibility the specification of producing machine could have in design.

The capsulated pressed reduced iron compound and the method to produce such a compound may be characterized by the following items:
A) CAPRI Product
   ▪ Initial Shape and Dimensions of the CAPRI product
      ✔ Cylindrical, pyramidal, capsulated or any other shape which the CAPRI Plant Unit could produce provided that it may not sacrifice its added values
      ✔ Diameter of 8 - 15 cm which may changes regarding capsulation procedure provided that does not sacrifice its transportation and/or transfer advantages
      ✔ Height of 10 - 18 cm which may changes regarding pressing force provided that does not sacrifice its transportation and/or transfer advantages
   ▪ Initial Covering Shield Material and Dimensions of the CAPRI product
      ✔ Steel sheet (simple as black or non-galvanized) or any other metallic or non-metallic material provided that it enhances CAPRI added values and not sacrifices them
      ✔ Diameter of 8 - 15 cm or in accordance to CAPRI selected shape
      ✔ Height of 35 - 42 cm or in accordance to CAPRI selected shape
         ▪ Total weight of CDRI in Each Piece of CAPRI
      ✔ 2.8 - 19 kg
   ▪ Weight of Covering Shield in Each Piece of CAPRI
      ✔ 100 - 1000 g
   ▪ Apparent Density of the CAPRI product
      ✔ 5.0 - 6.0 g/cm³
B) Process of producing CAPRI productions
   Comprising the steps of
   ▪ Canning
   ▪ CDRI/Optional Additives Charging & Head Capping
   ▪ Cans Feeding into fixed Moulds/Moulds of a Forging Press or forming device
   ▪ Pressing
   ▪ CAPRI Ejecting from the fixed Moulds
   ▪ Product Collecting
C) Forging Press
   ▪ Initial Specification of the Forging Press or the forming device
      ✔ Heavy Vertical Press
      ✔ Mechanical or Hydraulic depending on investment and capacity calculations
      ✔ Pressing Capacity: 500 - 10000 t_{f} (4903,33 kN - 98066.5 kN) depending on investment and capacity calculations and size
      ✔ Operating Pressure of System: 318 bar approx. (Hydraulic)
      ✔ Design Pressure of System: 350 bar (Hydraulic)
      ✔ Applied Pressure on each piece of CAPRI: 4500 - 5000 kg_{f}/cm²
      ✔ Stroke: Approx.300 - 450 mm
      ✔ Rated Production Capacity of 5 - 200 tph depending on the selected pressing mechanism and CAPRI size

Table2 gives the main specifications of pressing machine based on the selected press capacity, plant unit capacity, CAPRI size, and press type.

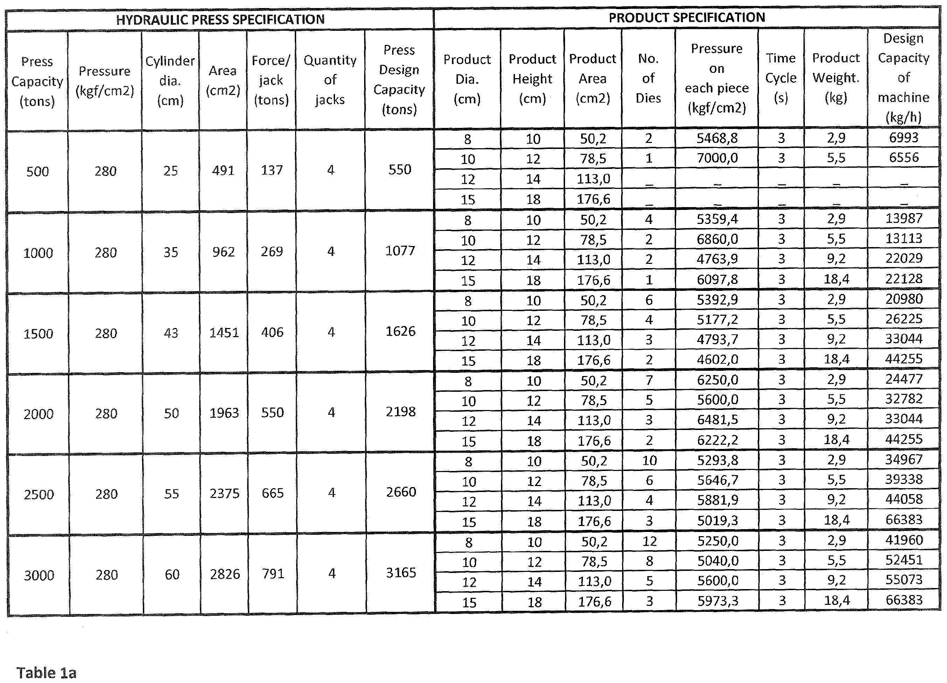

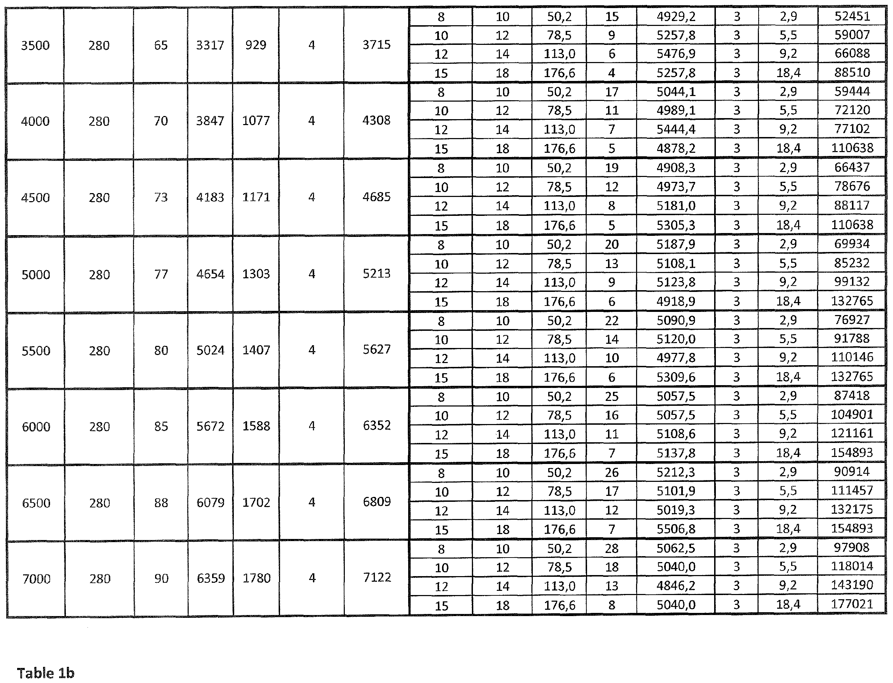

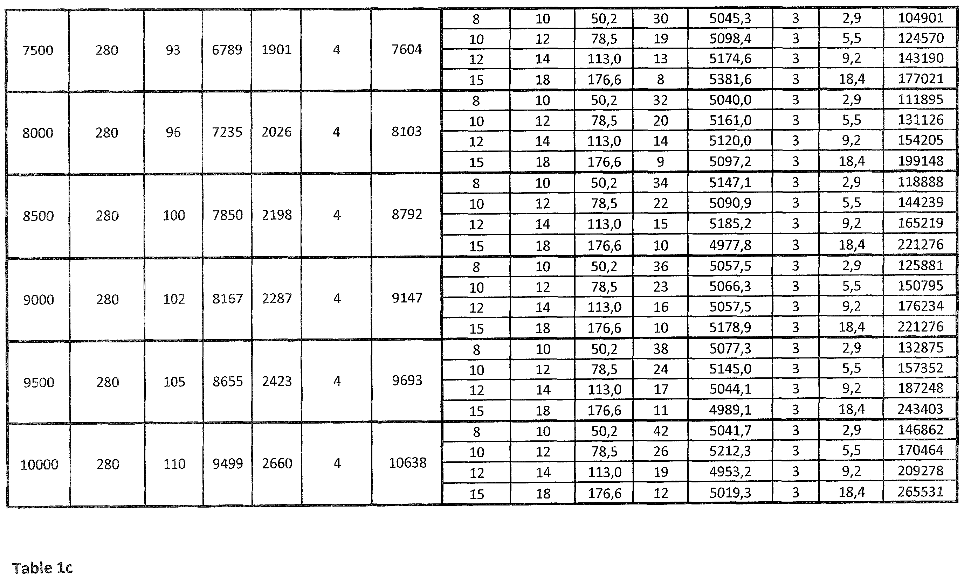

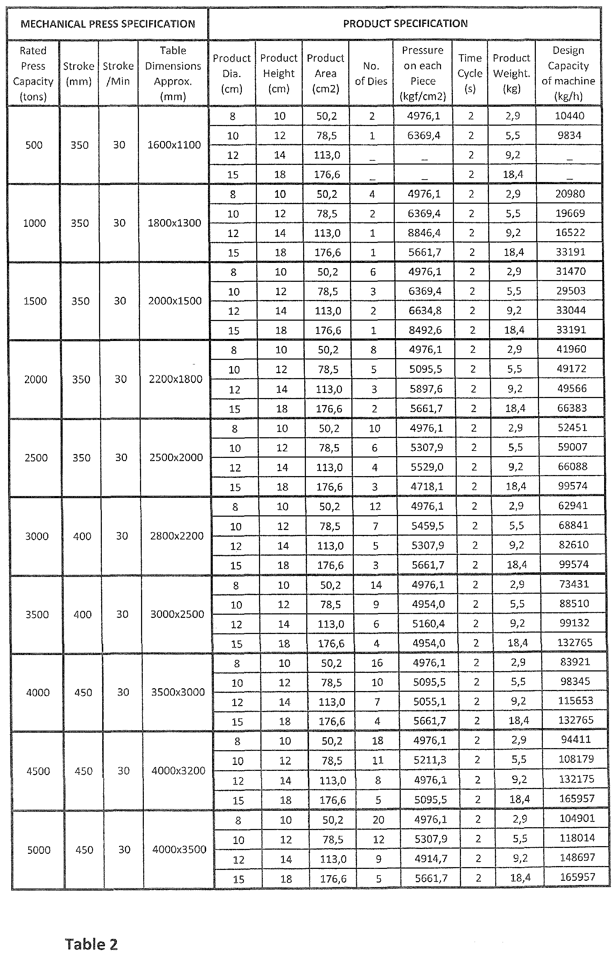

It has to be noted that the initial specification of press was developed by relying on the results of pilot tests. However, it is possible to manufacture mechanical/hydraulic presses with horizontal configuration and even of roller type (see Fig.1) to be capable of producing CAPRI product with the exactly same advantages described above.

Fig. 1 schematically shows a roller press 1 comprising two rollers 3 to which the reduced iron or sponge iron 2 which has been obtained by reducing iron ore in an iron ore direct reduction shaft furnace is fed. The circumferential surfaces of both rollers 3 are provided with several moulds which pairwise cooperate with each other to press the delivered reduced iron or sponge iron 2 to a briquette in a quite common manner. But additionally each circumferential surface 3 of a respective roller 3 is covered by a covering embodying material 4 which constitutes a layer of each mould and wherein the reduced iron or sponge iron 2 is hold between the two blanks of covering embodying material 4 and is completely encapsulated when press-formed with required force between the two rollers 3. As mentioned before encapsulation of material with required force applied is a key technique of this invention.

Various advantages of applying CAPRI in comparison to scrap - CDRI/HBI are as follows:
A) Physical, Chemical & Metallurgical Characteristics of CAPRI
   - Easy flow due to its shape and dimensions
   - Fast penetration to bottom layer of molten slag due to its higher density compared with CDRI and even HBI
   - Shorter melting time compared with CDRI due to its higher conductivity
   - More constant and uniform chemical composition compared with scrap
   - Lower content of chemical contaminants compared with scrap which may provide production of higher grades of steel
   - Do not need any binder or other additive to produce it
   - Do not produce dust during transportation compared with CDRI transport
B) Storing & Transportation of CAPRI
   - Do not need passivation by implementing Aging Procedure compared with CDRI
   - Stockpiled storing capability in open yard with no danger of auto oxidation of CDRI and firing of piles, exactly same as HBI
   - Capable of bulk shifting/moving by using loaders without any expected major physical damage to the CAPRI pieces or breakage
   - Capable of transporting in long distance inland and marine shipment without any special safety precautions
   - Capable of transporting by big bags in case of end user or purchaser tendency
   - Possible to be charged into EAF via both available routes: scrap bucket or CDRI conveying system without any modification on them
C) Benefits of Installing & Operating CAPRI Production Line
   - Continuous steady state production line in compliance with CDRI production line
   - Short delivery and installation time of plant unit
   - Less capital investment cost compared with establishment of an HBI production line
   - Rather low space requirements for CAPRI production package compared with an HBI production package and less complexity plus low operation costs
   - Portable press machines for CAPRI production which do not need any foundation
   - Less continuous operation of DRI transportation equipment to EAF because of higher metallic content (depending on density ρ ) of CAPRI compared with CDRI which actually reduces depreciation rate of related equipment and machinery to one third
   - Simpler repair and maintenance of CAPRI press/machines compared with HBI roller press and longer replacement periods of spare parts and consumables
D) Changing Charging Regime from Scrap/CDRI to CAPRI
   - Less charging of scrap buckets into EAF per several heats
   - Capability of preheating CAPRI compared with CDRI
   - No need to change the configuration and design of the existing arc furnace CDRI charging device in case of using CAPRI
   - Decreasing the Nitrogen content trapped in the produced steel up to 60-70% in case of charging CAPRI, compared with charging scrap into EAF
   - Lower flicker and noise levels in case of charging CAPRI compared with charging scrap into EAF
E) Superior Properties of Different Grades of the CAPRI Product
   - Application of maximum 35% of passivated CDRI fines along with CDRI is possible, in absence of any kind of binder without losing CAPRI's superior characteristics compared with CDRI.
   - Applying all the required additives during primary metallurgy, i.e. producing raw liquid steel in EAF, is possible by adding a little encapsulated pill carrying the additives or even as bulk materials into each piece of a CAPRI product. Such additives as a typical sample are as follows: Lime as 63 kg per ton of liquid steel, Dolomite as 30 kg per ton of liquid steel, and non-coking coal as 20 kg per ton of liquid steel.
   - Other ferrous metallic chips in different ratios along with CDRI may be pressed to a CAPRI Product to be charged into EAF.
   - Required additives for secondary metallurgy may be pressed to a CAPRI Product to be then later charged into a Ladle Furnace
F) Overall & Economic Benefits
   - Increasing the export share of countries such as Iran in international merchant business of DRI as in the shape of CAPRI with its different grades
   - More profit due to ease of long distance exportation with one third of volume-weight ratio
   - Allocating extra pricing for different types of CAPRI based on the aforementioned added values in comparison to CDRI and HBI
   - Preventing loss of investment and export limitations in the plants which are continuously producing CDRI without having the DR plant downstream facilities in operation

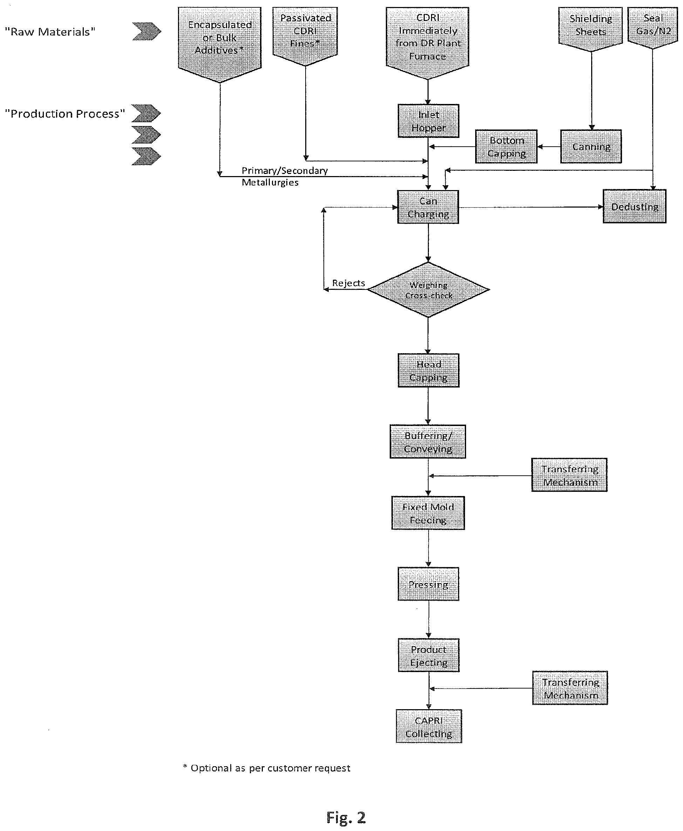

The CAPRI product is produced by applying an inventive process of which the Process Block Flow Diagram is shown in Fig. 2.

Bottom sealed cans or containers which are manufactured in a "Canning Unit" by using simple black steel or non-galvanized steel sheets will be going to be charged with a certain controlled weight of CDRI immediately coming from the outlet of DR Plant furnace (iron ore direct reduction shaft furnace) along with an optional specified ratio of passivated fines of CDRI and/or encapsulated required additives of primary metallurgy in the "Charging Unit" with e.g. for a typical rate of equal to, or greater than 13000 cans per hour for 65 tph with respective size of CAPRI. The properly filled-in cans, after passing a weighing cross-check inspection station, are going to be top capped with additional covering embodying material from the head in "Head Capping Unit" and directed to the pressing machines or forming device by a transferring mechanism with possibility of buffering of ready cans as well to be then later capsulated in pressing machines or forming devices ensuring respective capacity.

CAPRI is then produced by using sets of vertical 500 t_{f} (4903.33 kN) mechanical pressing machines as one example in this typical inventive process. Ordinary concepts of pressing rules are also used in such machines, unless that for the purpose of achieving to higher rates of production per unit time a special mechanism is applied to encompass feeding the fixed mould, ejecting the pressed cans and charging of cans. The so-called produced CAPRI will then be moved into the product conveying route.

A usual hydraulic vertical type 1600 t_{f} (15760 kN) pressing machine was also used in pilot production of this product.

The obtained product is applicable to be charged as a ferrous metallic material and a superior substitute of scrap, CDRI and HBI in Electric Arc Furnaces, Induction Furnaces, Blast Furnaces, Basic Oxygen Furnaces and Casting Furnaces as well as a secondary metallurgy additive into Ladle Furnaces.

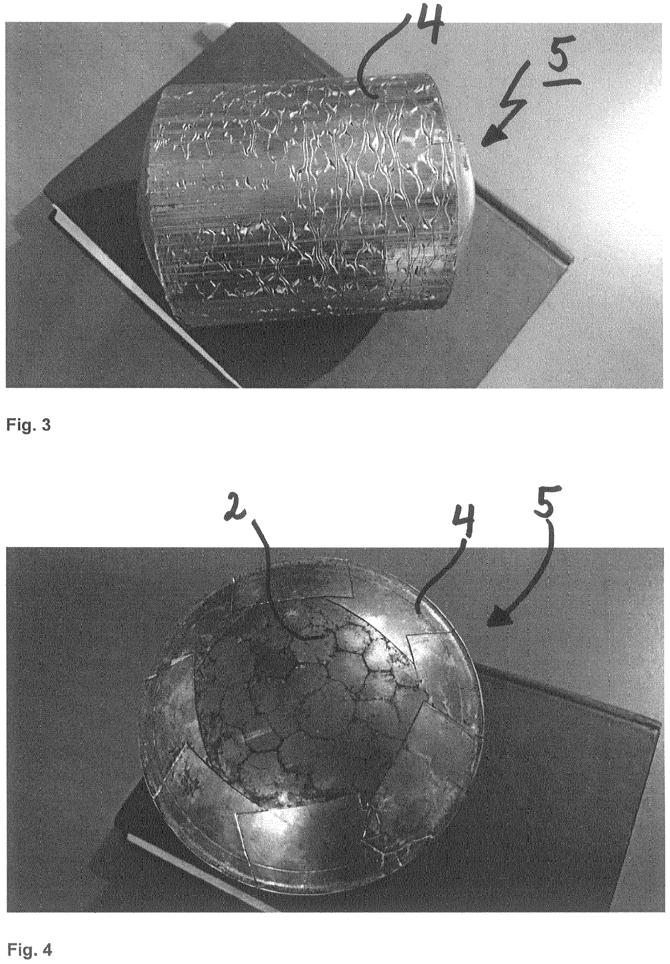

An example and embodiment of a capsulated pressed reduced iron compound 5 is shown in Fig. 3 - 5, wherein Fig. 4 and 5 show a CAPRI product without its closing cap or cover on its top side.

The capsulated added value pressed reduced iron compound CAPRI product is a superior substitute of Cold Direct Reduced Iron (CDRI), Cold Briquetted Iron (CBI), Cold Briquetted Sponge Iron (CBSI) and Hot Briquetted Iron (HBI) as a ferrous metallic charge into Electric Arc Furnace (EAF), Induction Furnace, Blast Furnace, Basic Oxygen Furnace (BOF) and Casting and Ladle Furnaces in various proper sizes and shapes. Its most important inventive elements are highlighted as follows:
✔ No mandatory need to use any kind of binder or chemical additive in producing CAPRI
✔ Covered with a shield of black steel sheet which could be of another metallic or even non-metallic material so that it may not negatively affects to CAPRI features and easy long distance transportation privileges and also its main melting process characteristics
✔ Optional privilege of adding the required additives for primary metallurgy as an encapsulated pill/capsule or even bulky material into each CAPRI product
✔ Capability to press other ferrous metallic chips in any optional ratio along with CDRI into each CAPRI product
✔ Capability to press all required additives of secondary metallurgy in any calculated ratio into each CAPRI product.

The application of shielding covers as primary sheets in proper size and thickness which will be going to be converted to cans or containers with closed bottom and bent grooves at the head to be later pressed and closed before the main pressing or press-forming process by employing a can producing machine and consequently charged with CDRI material and other additives by charging machines.

The CAPRI product is a replacement of scrap or reducer of percentage of charging regime share of scrap or even better a full replacement. In this case the same DRI which could not be used for creating hot heel will be utilized heading to the fact that percentage of scrap usage is reduced below 10% or even nil. This increases use of DRI in metallurgical regime which renders better quality of melt and giving more value to DRI and even not eliminating consumption of scrap but in the form a CAPRI product.

The CAPRI product is rendering avail on export and marketing of DRI which was once difficult providing more profit and market expansion for DRI plants.

The CAPRI product is rendering higher p than HBI which is valuable advantage both in transportation and condensed metallurgical value and reducing depreciation of transferring/charging facilities due to higher mass of CAPRI in compare to DRI weight-volume.

The CAPRI product is rendering possibility of inserting and using the passivated CDRI fines of DR plants by charging them into CAPRI creating more benefits to owners.

The CAPRI product Production Process (CAPRIPP) is consisting of the following process units as its main required production line configuration:
- Can Making
- Material Charging into Cans
- Buffering
- Pressing
- CAPRI Collecting/Storing

All the above can be summarized in that the invented product is a capsulated added value pressed reduced iron abbreviated as CAPRI product, which its purpose of invention is eliminating the following indicated problems in applying scrap, CDRI, CBSI, and even HBI in the steelmaking process and also promoting the international business and trade of DRI:
▪ Necessity to consider special safety cautions in open yard storage, inland and marine transport of CDRI
▪ Lack of scrap and high and fluctuating prices of qualified scrap material
▪ Weakness of countries such as Iran in international export share of DRI despite their great production capacity potential
▪ Mandatory need to use binder or other additives in combination with binding in producing CBI and CBSI
▪ Need to a high capital investment cost for modifying the existing CDRI production lines to be capable of producing HBI
▪ High repair and maintenance costs of HBI machines and ancillaries
▪ High capital cost of HBI machines and their ancillary equipment as a result of only existing few exclusive worldwide manufacturers of these machines
▪ Technical difficulties of penetrating CDRI into bottom layers of molten slag due to its lower density, hence floating on slag layer without melting and exiting the EAF or Induction furnace with slag.

The CAPRI product provides advantages in respect to "Transport Operations", "Metallurgy & Chemistry" and "Marketing" categories.

It is characterized by the following technical features:
- No auto-oxidation, self-ignition, or even explosion due to application of a pressed shielding cover
- Providing a considerably longer service life of Press moulds because of employing the shielding concept, thus avoiding gradual abrasion of inner shell of the moulds by CDRI particles as a poor ductile material with a strong sanding property
- No need to passivation of CDRI via Aging Procedure
- Bigger apparent density compared with CDRI, CBSI and even HBI
- Bigger bulk density compared with CDRI, CBSI and even HBI
- Easy flow even with bigger weight compared to CDRI despite its shielding cover
- Excellent mechanical strength compared with CDRI, CBSI and HBI with no fines
- Bigger conductivity
- Nil porosity compared with CDRI, CBSI and HBI
- Bigger metallic content in each piece
- No mandatory need to apply any binder or additive in CAPRI production
- Lower depreciation of conveyors and other transport equipment of CDRI which may be identically used for CAPRI transfer into EAF.

As a 100% substitute of scrap and various shapes of DRI in charging to EAF, Induction Furnaces, BF (Blast Furnace), BOF and casting furnaces which can eliminate import of extra raw material (scrap) into the plant further reducing commercial activity and involvement with fluctuating markets for obtaining them as well as an encapsulated additive to be charged into Ladle Furnace during secondary metallurgy refining operations.

## Claims

1. Method to produce a capsulated pressed reduced iron compound (5), which is completely encapsulated by a covering material (4), comprising the steps of reducing iron ore in an iron ore direct reduction shaft furnace and subjecting a certain amount of the thus obtained reduced iron or sponge iron (2) to a cold briquetting or cold forming process executed in a forming device, wherein the certain amount of reduced iron or of sponge iron (2) is delivered to at least one mould arranged in the forming device, where it is exposed to a compressive force and press-formed to constitute the capsulated pressed reduced iron compound (5) having a shape corresponding to the form provided by the at least one mould arranged in the forming device and having an apparent density of greater than 5.0 g/cm³, and
wherein either the certain amount of reduced iron or sponge iron (2) is completely encapsulated by means of a covering material (4) having a thickness of utmost 1.0 mm and/or of at least 0.2 mm and which is provided before the certain amount of reduced iron or sponge iron (2) is exposed to the compressive force, wherein the certain amount of reduced iron or sponge iron (2) is completely encapsulated by the covering material (4) having a thickness of utmost 1.0 mm and/or of at least 0.2 mm to cover the outside of the certain amount of reduced iron or sponge iron (2) before it is delivered to the at least one mould provided in the forming device and before it is exposed to the compressive force press-forming said iron compound (5),
or
wherein the certain amount of reduced iron or sponge iron (2) is completely encapsulated by means of a covering material (4) having a thickness of utmost 1.0 mm and/or of at least 0.2 mm and which is provided during the certain amount of reduced iron or sponge iron (2) is exposed to the compressive force, wherein the certain amount of reduced iron or sponge iron (2) is completely encapsulated by the covering material (4) having a thickness of utmost 1.0 mm and/or of at least 0.2 mm which is simultaneously provided to build an encapsulating layer within the mould when the certain amount of reduced iron or sponge iron (2) is exposed to the compressive force and press-formed to said iron compound (5),
or
wherein the certain amount of reduced iron or sponge iron (2) is completely encapsulated by means of a covering material (4) having a thickness of utmost 1.0 mm and/or of at least 0.2 mm and which is provided immediately after the certain amount of reduced iron or sponge iron (2) is press-formed by means of the compressive force to embody the form of the iron compound (5), wherein the covering material (4) having a thickness of utmost 1.0 mm and/or of at least 0.2 mm is attached to form an encapsulating envelop of said iron compound (5).

2. Method according to one of the preceding claims, wherein the reduced iron or sponge iron (2) is mixed with up to 35 % by weight of passivated fine grade reduced iron particles (fines) coming from the iron ore direct reduction shaft furnace before it is delivered to the at least one mould of the forming device.

3. Method according to one of the preceding claims, wherein the reduced iron or sponge iron (2) is delivered to the at least one mould of the forming device without any admixture of a binder.

4. Method according to one of the preceding claims, wherein the reduced iron or sponge iron (2) is delivered to the at least one mould of the forming device without having passed any passivation process.

5. Method according to one of the preceding claims, wherein the reduced iron or sponge iron (2) is delivered to the at least one mould of the forming device mixed with additives, especially lime, dolomite or non-coking coal, required during a primary metallurgical process step of a steel making process, especially during a primary metallurgical process step producing an iron melt.

6. Method according to one of the preceding claims, wherein the reduced iron or sponge iron (2) is delivered to the at least one mould of the forming device mixed with additives required during a secondary metallurgical process step of a steel making process, especially during a secondary metallurgical process step to refine an iron melt.

7. Method according to one of the preceding claims, wherein the reduced iron or sponge iron (2) is delivered to the at least one mould of the forming device mixed with ferrous metallic chips made of scrap.

8. Method according to one of the preceding claims, wherein the reduced iron or sponge iron (2) is filled into a can or container consisting of the covering material (4) and that the can or container is afterwards closed by a cover or cap consisting of the covering material (4) and that the capped can or container is then delivered to the mould of the forming device and press-formed to constitute the capsulated pressed reduced iron compound (5).

9. Method according to one of the preceding claims, wherein the covering material (4) consists of a metallic material, especially a non-galvanized steel sheet.

10. Method according to one of the preceding claims, wherein it comprises the steps of producing a can or container consisting of the covering material (4), charging or filling the can or container with the certain amount of the reduced iron or sponge iron (2), completely encapsulating the certain amount of the reduced iron or sponge iron (2) by means of the covering material (4), especially by capping the can or container with a cover or cap consisting of the covering material (4), and press-forming the encapsulated certain amount of reduced iron or sponge iron (2) to constitute the capsulated pressed reduced iron compound (5) being of a shape provided by the mould of the forming device.

11. Method according to one of the preceding claims, wherein a capsulated pressed reduced iron compound (5) having a diameter of 8 - 15 cm and/or having a height of 10 - 18 cm and/or having a product weight of 2.5 - 19.0 kg is pressed-formed.

12. Method according to one of the preceding claims, wherein during press-forming of a respective certain amount of reduced iron or of sponge iron(2) in the at least one mould of the forming device a pressing force of at least 4500 kg_{f}/cm² or 44,13 kN/cm², preferably of at least 5000 kg_{f}/cm² or 44,13 kN/ cm², is applied to the respective certain amount of reduced iron or of sponge iron (2) as the compressive force press-forming the capsulated pressed reduced iron compound (5).

13. Capsulated pressed reduced iron compound (5) comprising a completely encapsulated and press-formed amount of reduced iron or sponge iron (2) obtained from an iron ore direct reduction process executed in an iron ore direct reduction shaft furnace, which amount of reduced iron or sponge iron (2) is complete encapsulated by an enveloping covering material (4), especially a metallic material, having a thickness of utmost 1.0 mm and/or of at least 0.2 mm and which is press-formed to have an apparent density of greater than 5.0 g/cm³, preferably of 5.0 g/cm³ - 6.0 g/cm³.

14. Capsulated pressed reduced iron compound (5) according to claim 13, produced with a method according to one or more of the claims 1 - 12.

## Patentansprüche

1. Verfahren zur Herstellung einer gekapselten gepressten reduzierten Eisenzusammensetzung (5), die vollständig von einem Abdeckmaterial (4) eingekapselt ist, umfassend die Schritte Reduzieren von Eisenerz in einem Eisenerzdirektreduktionsschachtofen und Unterziehen einer bestimmten Menge des so erhaltenen reduzierten Eisens oder Eisenschwamms (2) einem Kaltbrikettier- oder Kaltformverfahren, das in einer Formvorrichtung ausgeführt wird, wobei die bestimmte Menge an reduziertem Eisen oder Eisenschwamm (2) mindestens einer in der Formvorrichtung angeordneten Form zugeführt wird, wo es einer Druckkraft ausgesetzt und pressgeformt wird, um die gekapselte gepresste reduzierte Eisenzusammensetzung (5) auszubilden, die eine Form aufweist, die der mindestens einen in der Formvorrichtung bereitgestellten Form entspricht und die eine Rohdichte von mehr als aufweist 5,0 g/cm³, und
wobei entweder die bestimmte Menge an reduziertem Eisen oder an Eisenschwamm (2) vollständig durch ein Abdeckmaterial (4) eingekapselt wird, das eine Dicke von höchstens 1,0 mm und/oder von mindestens 0,2 mm aufweist, und das bereitgestellt wird bevor die bestimmte Menge an reduziertem Eisen oder Eisenschwamm (2) der Druckkraft ausgesetzt wird, wobei die bestimmte Menge an reduziertem Eisen oder Eisenschwamm (2) vollständig von dem Abdeckmaterial (4) mit einer Dicke von maximal 1,0 mm und/oder von mindestens 0,2 mm eingekapselt wird, um die Außenseite der bestimmten Menge an reduziertem Eisen oder Eisenschwamm (2) abzudecken, bevor es der mindestens einen in der Formvorrichtung vorgesehenen Form zugeführt wird und bevor es der die Eisenzusammensetzung (5) pressformenden Druckkraft ausgesetzt wird,
oder
wobei die bestimmte Menge an reduziertem Eisen oder Eisenschwamm (2) vollständig mittels eines Abdeckmaterials (4) mit einer Dicke von maximal 1,0 mm und/oder von mindestens 0,2 mm eingekapselt wird und das bereitgestellt wird, während die bestimmte Menge an reduziertem Eisen oder Eisenschwamm (2) der Druckkraft ausgesetzt wird, wobei die bestimmte Menge an reduziertem Eisen oder Eisenschwamm (2) vollständig von dem Abdeckmaterial (4) mit einer Dicke von höchstens 1,0 mm und/oder von mindestens 0,2 mm eingekapselt wird, die gleichzeitig bereitgestellt wird, um eine Einkapselungsschicht innerhalb der Form auszubilden, wenn die bestimmte Menge an reduziertem Eisen oder Eisenschwamm (2) der Druckkraft ausgesetzt und zu der Eisenzusammensetzung (5) pressgeformt wird,
oder
wobei die bestimmte Menge an reduziertem Eisen oder an Eisenschwamm (2) vollständig mit einem Abdeckmaterial (4) umhüllt ist, das eine Dicke von höchstens 1,0 mm und/oder von mindestens 0,2 mm aufweist, und das unmittelbar nachdem die bestimmten Menge an reduziertem Eisen oder Eisenschwamm (2) mittels der Druckkraft zur Ausbildung der Form der Eisenzusammensetzung (5) pressgeformt wird, bereitgestellt wird, wobei das Abdeckmaterial (4) mit einer Dicke von höchstens 1,0 mm und/oder von mindestens 0,2 mm aufgebracht wird, um eine einkapselnde Umhüllung der Eisenzusammensetzung (5) auszubilden.

2. Verfahren nach einem der vorhergehenden Ansprüche, wobei das reduzierte Eisen oder der Eisenschwamm (2) mit bis zu 35 Gew.% passivierten feinkörnig reduzierten Eisenteilchen (Feingut) aus dem Eisenerzdirektreduktionsschachtofen gemischt wird bevor es der mindestens einen Form der Formvorrichtung zugeführt wird.

3. Verfahren nach einem der vorhergehenden Ansprüche, wobei das reduzierte Eisen- oder der Eisenschwamm (2) ohne Beimischung eines Bindemittels der mindestens einen Form der Umformvorrichtung zugeführt wird.

4. Verfahren nach einem der vorhergehenden Ansprüche, bei dem das reduzierte Eisen oder der Eisenschwamm (2) der mindestens einen Form der Umformvorrichtung zugeführt wird, ohne ein Passivierungsverfahren durchlaufen zu haben.

5. Verfahren nach einem der vorhergehenden Ansprüche, wobei das reduzierte Eisen oder der Eisenschwamm (2) der mindestens einen Form der Formvorrichtung gemischt mit Zusätzen, insbesondere Kalk, Dolomit oder nichtkokshaltiger Kohle, die während eines primärmetallurgischen Verfahrensschritts eines Stahlherstellungsverfahrens, insbesondere während eines primärmetallurgischen Verfahrensschritts zur Herstellung einer Eisenschmelze, benötigt werden, zugeführt wird.

6. Verfahren nach einem der vorhergehenden Ansprüche, wobei das reduzierte Eisen oder der Eisenschwamm (2) der mindestens einen Form der Formvorrichtung gemischt mit Zusätzen, die während eines sekundärmetallurgischen Verfahrensschrittes eines Stahlherstellungsverfahrens, insbesondere während eines sekundärmetallurgischen Verfahrensschritts zum Frischen einer Eisenschmelze, benötigt werden, zugeführt wird.

7. Verfahren nach einem der vorhergehenden Ansprüche, wobei das reduzierte Eisen oder der Eisenschwamm (2) der mindestens einen Form der Formvorrichtung gemischt mit eisenhaltigen metallischen Spänen aus Schrott zugeführt wird.

8. Verfahren nach einem der vorhergehenden Ansprüche, wobei das reduzierte Eisen oder der Eisenschwamm (2) in eine Dose oder einen Behälter gefüllt wird, der/die aus dem Abdeckmaterial (4) besteht und dass die Dose oder der Behälter anschließend mit einer aus dem Abdeckmaterial (4) bestehenden Abdeckung oder Kappe verschlossen wird, und dass die verschlossene Dose oder der Behälter dann der Form der Formvorrichtung zugeführt und pressgeformt wird, um die gekapselte gepresste reduzierte Eisenzusammensetzung (5) auszubilden.

9. Verfahren nach einem der vorhergehenden Ansprüche, wobei das Abdeckmaterial (4) aus einem metallischen Material, insbesondere einem nicht galvanisierten Stahlblech, besteht.

10. Verfahren nach einem der vorhergehenden Ansprüche, wobei es die Schritte umfasst: Herstellen einer Dose oder eines Behälters aus dem Abdeckmaterial (4), Beladen oder Befüllen der Dose oder des Behälters mit der bestimmten Menge des reduzierten Eisens oder des Eisenschwamms (2), vollständiges Einkapseln der bestimmten Menge des reduzierten Eisen - oder des Eisenschwamms (2) mittels des Abdeckmaterials (4), insbesondere durch Bedecken der Dose oder des Behälters mit einer Verschlusskappe oder einem Verschlussdeckel, die/der aus dem Abdeckmaterial (4) besteht, und Pressformen der eingekapselten bestimmten Menge an reduziertem Eisen oder Eisenschwamm (2), um die gekapselte gepresste reduzierte Eisenzusammensetzung (5), die die durch die Form der Formvorrichtung bereitgestellte Form aufweist.

11. Verfahren nach einem der vorhergehenden Ansprüche, wobei eine gekapselte gepresste reduzierte Eisenzusammensetzung (5) mit einem Durchmesser von 8 - 15 cm und/oder mit einer Höhe von 10 - 18 cm und/oder mit einem Produktgewicht von 2,5 - 19,0 kg pressgeformt wird.

12. Verfahren nach einem der vorhergehenden Ansprüche, wobei während des Pressformens einer jeweiligen bestimmten Menge an reduziertem Eisen oder Eisenschwamm (2) in der mindestens einen Form der Formvorrichtung eine Presskraft von mindestens 4500 kg_{f}/cm² oder 44,13 kN/cm², vorzugsweise von mindestens 5000 kg_{f}/cm² oder 44,13 kN/cm², auf die jeweilige bestimmte Menge an reduziertem Eisen oder an Eisenschwamm (2) als die eingekapselte gepresste reduzierte Eisenzusammensetzung (5) pressgeformte Druckkraft aufgebracht wird.

13. Gekapselte gepresste reduzierte Eisenzusammensetzung (5) umfassend eine vollständig eingekapselte und pressgeformte Menge an reduziertem Eisen oder Eisenschwamm (2), erhalten aus einem Eisenerzdirektreduktionsverfahren, das in einem Eisenerzdirektreduktionsschachtofen durchgeführt wird, wobei die Menge an reduziertem Eisen oder Eisenschwamm (2) vollständig von einem umhüllenden Abdeckmaterial (4), insbesondere einem metallischen Material, eingekapselt ist, das eine Dicke von maximal 1,0 mm und/oder von mindestens 0,2 mm aufweist und das pressgeformt ist, um eine Rohdichte von mehr als 5,0 g/cm³, vorzugsweise von 5,0 g/cm³ bis 6,0 g/cm³, aufzuweisen.

14. Gekapselte gepresste reduzierte Eisenzusammensetzung (5) nach Anspruch 13, hergestellt mit einem Verfahren nach einem oder mehreren der Ansprüche 1 - 12.

## Revendications

1. Procédé de production d'un composé de fer réduit pressé encapsulé (5) qui est complètement encapsulé par un matériau de revêtement (4), comprenant les étapes consistant à réduire du minerai de fer dans un four vertical de réduction directe de minerai de fer et à soumettre une certaine quantité du fer réduit ou du fer spongieux (2) ainsi obtenu à un procédé de briquetage à froid ou de formage à froid exécuté dans un dispositif de formage, dans lequel la certaine quantité de fer ou de fer spongieux réduit (2) est introduite dans au moins un moule agencé dans le dispositif de formage, où elle est exposée à une force de compression et formée par pressage pour constituer le composé de fer réduit pressé encapsulé (5) ayant une forme correspondant à la forme fournie par l'au moins un moule agencé dans le dispositif de formage et ayant une masse volumique apparente supérieure à 5,0 g/cm³, et
dans lequel la certaine quantité de fer ou de fer spongieux réduit (2) est complètement encapsulée au moyen d'un matériau de revêtement (4) ayant une épaisseur d'au plus 1,0 mm et/ou d'au moins 0,2 mm et qui est fourni avant que la certaine quantité de fer ou de fer spongieux réduit (2) soit exposée à la force de compression, dans lequel la certaine quantité de fer ou de fer spongieux réduit (2) est complètement encapsulée par le matériau de revêtement (4) ayant une épaisseur d'au plus 1,0 mm et/ou d'au moins 0,2 mm pour couvrir la partie extérieure de la certaine quantité de fer ou de fer spongieux réduit (2) avant qu'elle soit introduite dans l'au moins un moule fourni dans le dispositif de formage et avant qu'elle soit exposée à la force de compression formant par pressage ledit composé de fer (5),
ou
dans lequel la certaine quantité de fer ou de fer spongieux réduit (2) est complètement encapsulée au moyen d'un matériau de revêtement (4) ayant une épaisseur d'au plus 1,0 mm et/ou d'au moins 0,2 mm et qui est fourni pendant que la certaine quantité de fer ou de fer spongieux réduit (2) est exposée à la force de compression, dans lequel la certaine quantité de fer ou de fer spongieux réduit (2) est complètement encapsulée par le matériau de revêtement (4) ayant une épaisseur d'au plus 1,0 mm et/ou d'au moins 0,2 mm qui est fourni simultanément pour former une couche d'encapsulation dans le moule lorsque la certaine quantité de fer ou de fer spongieux réduit (2) est exposée à la force de compression et formée par pressage en ledit composé de fer (5),
ou
dans lequel la certaine quantité de fer ou de fer spongieux réduit (2) est complètement encapsulée au moyen d'un matériau de revêtement (4) ayant une épaisseur d'au plus 1,0 mm et/ou d'au moins 0,2 mm et qui est fourni immédiatement après que la certaine quantité de fer ou de fer spongieux réduit (2) a été formée par pressage au moyen de la force de compression pour épouser la forme du composé de fer (5), dans lequel le matériau de revêtement (4) ayant une épaisseur d'au plus 1,0 mm et/ou d'au moins 0,2 mm est fixé pour former une enveloppe d'encapsulation dudit composé de fer (5).

2. Procédé selon l'une des revendications précédentes, dans lequel le fer ou le fer spongieux réduit (2) est mélangé dans une proportion maximale de 35 % en poids à des particules de fer réduit passivées de qualité fine (fines) provenant du four vertical de réduction directe de minerai de fer avant d'être introduit dans l'au moins un moule du dispositif de formage.

3. Procédé selon l'une des revendications précédentes, dans lequel le fer ou le fer spongieux réduit (2) est introduit dans l'au moins un moule du dispositif de formage sans aucune adjonction d'un liant.

4. Procédé selon l'une des revendications précédentes, dans lequel le fer ou le fer spongieux réduit (2) est introduit dans l'au moins un moule du dispositif de formage sans être passé par un quelconque procédé de passivation.

5. Procédé selon l'une des revendications précédentes, dans lequel le fer ou le fer spongieux réduit (2) est introduit dans l'au moins un moule du dispositif de formage mélangé à des additifs, en particulier de la chaux, de la dolomite ou du charbon non cokéfiable, requis lors d'une étape primaire d'un procédé métallurgique d'élaboration de l'acier, en particulier lors d'une étape primaire d'un procédé métallurgique produisant un bain de fer fondu.

6. Procédé selon l'une des revendications précédentes, dans lequel le fer ou le fer spongieux réduit (2) est introduit dans l'au moins un moule du dispositif de formage mélangé à des additifs requis lors d'une étape secondaire d'un procédé métallurgique d'élaboration de l'acier, en particulier lors d'une étape secondaire d'un procédé métallurgique de raffinage d'un bain de fer fondu.

7. Procédé selon l'une des revendications précédentes, dans lequel le fer ou le fer spongieux réduit (2) est introduit dans l'au moins un moule du dispositif de formage mélangé à des copeaux métalliques ferreux issus de matériaux de récupération.

8. Procédé selon l'une des revendications précédentes, dans lequel le fer ou le fer spongieux réduit (2) est versé dans un bidon ou un récipient constitué du matériau de revêtement (4) et le bidon ou le récipient est ensuite fermé par un couvercle ou un capuchon constitué du matériau de revêtement (4) et le bidon ou le récipient capuchonné est ensuite introduit dans le moule du dispositif de formage et formé par pressage pour constituer le composé de fer réduit pressé encapsulé (5).

9. Procédé selon l'une des revendications précédentes, dans lequel le matériau de revêtement (4) est constitué d'un matériau métallique, en particulier d'une tôle d'acier non galvanisé.

10. Procédé selon l'une des revendications précédentes, dans lequel le procédé comprend les étapes de production d'un bidon ou d'un récipient constitué du matériau de revêtement (4), de chargement ou de remplissage du bidon ou du récipient avec la certaine quantité du fer ou du fer spongieux réduit (2), d'encapsulation complète de la certaine quantité du fer ou du fer spongieux réduit (2) au moyen du matériau de revêtement (4), en particulier en capuchonnant le bidon ou le récipient avec un couvercle ou un capuchon constitué du matériau de revêtement (4), et de formage par pressage de la certaine quantité encapsulée de fer ou de fer spongieux réduit (2) pour constituer le composé de fer réduit pressé encapsulé (5) se présentant sous une forme fournie par le moule du dispositif de formage.

11. Procédé selon l'une des revendications précédentes, dans lequel un composé de fer réduit pressé encapsulé (5) ayant un diamètre de 8 à 15 cm et/ou ayant une hauteur de 10 à 18 cm et/ou ayant un poids de produit de 2,5 à 19,0 kg est formé par pressage.

12. Procédé selon l'une des revendications précédentes, dans lequel lors du formage par pressage d'une certaine quantité respective de fer ou de fer spongieux réduit (2) dans l'au moins un moule du dispositif de formage, une force de compression d'au moins 4500 kg_{f}/cm² ou 44,13 kN/cm², de préférence d'au moins 5000 kg_{f}/cm² ou 44,13 kN/cm², est appliquée à la certaine quantité respective de fer ou de fer spongieux réduit (2) comme force de compression formant par pressage le composé de fer réduit pressé encapsulé (5).

13. Composé de fer réduit pressé encapsulé (5) comprenant une quantité complètement encapsulée et formée par pressage de fer ou de fer spongieux réduit (2) obtenue à partir d'un procédé de réduction directe de minerai de fer exécuté dans un four vertical de réduction directe de minerai de fer, ladite quantité de fer ou de fer spongieux réduit (2) étant complètement encapsulée par un matériau de revêtement enveloppant (4), en particulier un matériau métallique, ayant une épaisseur d'au plus 1,0 mm et/ou d'au moins 0,2 mm et qui est formé par pressage pour avoir une masse volumique apparente supérieure à 5,0 g/cm³, de préférence de 5,0 g/cm³ à 6,0 g/cm³.

14. Composé de fer réduit pressé encapsulé (5) selon la revendication 13, produit avec un procédé selon une ou plusieurs des revendications 1 à 12.
